# DEMANDE DE BREVET EUROPEEN

(11) **EP 1 882 910 A1**
(43) Date de publication de la demande: **30.01.2008**
(21) Numéro de dépôt: 07290874.2
(22) Date de dépôt: 11.07.2007
(51) Int. Cl.: G01D 11/24

(54) **Procédé de montage d'un capteur dans son boîtier et dispositif de mesure**

(30) Priorité: 28.07.2006 FR 0606951
(71) Demandeur: S.N.R. ROULEMENTS, 74000 Annecy (FR)
(72) Inventeur: Ballas, Gérard, 74000 Annecy (FR); Lesigne, Clothilde, 74370 Argonay (FR); Batail, Emmanuel, 74960 Meythet (FR); Perillat, James, 74600 Seynod (FR)
(74) Mandataire: Broydé, Marc

(57) **Abrégé**

Pour assurer un positionnement précis d'un capteur électromagnétique ou optique dans un boîtier (10) comportant un socle rigide (14) pourvu d'au moins une paroi (22) délimitant l'intérieur du boîtier de l'extérieur du boîtier, le socle ayant une surface extérieure de positionnement tournée vers l'extérieur, on assemble le capteur de la manière suivante : la surface extérieure de positionnement est placée au contact d'un gabarit de montage (44) ; le capteur (42) est placé dans une position de montage au moins partiellement à l'intérieur du boîtier, sans contact avec le socle (14), en contact avec le gabarit (44) au travers d'une ouverture (32) de la paroi ; un matériau coulant (52) est introduit à l'intérieur du boîtier (10) de manière à noyer au moins partiellement le capteur (42) ; et le matériau coulant (52) est solidifié de manière à fixer le capteur (42) en position par rapport au boîtier (10).

## Description

### DOMAINE TECHNIQUE DE L'INVENTION

L'invention a trait à un capteur électromagnétique ou optique destiné à détecter les variations d'une grandeur mesurée induites par le passage à faible distance devant le capteur d'un codeur mobile par rapport au capteur. Plus spécifiquement, elle a trait au montage d'un tel capteur dans son boîtier de protection.

### ETAT DE LA TECHNIQUE ANTERIEURE

Dans le document EP 0 800 087 est décrit un dispositif de mesure comportant, à l'intérieur d'un boîtier, une puce à effet Hall et un aimant de polarisation maintenu dans une cage en matériau plastique. La puce comporte des rebords biseautés qui viennent se positionner à l'intérieur d'une fenêtre de forme correspondante pratiquée dans une face du boîtier. La puce est prise en sandwich entre la paroi du boîtier et l'aimant. Pour ajuster la direction du champ magnétique de l'aimant, il est possible de tourner la cage avant de fixer définitivement les éléments en place à l'aide d'une résine. Une fois le dispositif assemblé, son positionnement et son montage par rapport à la cible magnétique lue par la cellule à effet Hall est délicat. En effet, les dimensions du boîtier ne sont pas nécessairement précises, notamment s'il s'agit d'un boîtier moulé en matière plastique qui peut connaître, par son procédé de fabrication, des dispersions dimensionnelles importantes d'une pièce à l'autre. Par conséquent, des ajustements sont nécessaires lors du montage du dispositif de mesure en regard de la cible magnétique lue par le capteur.

Dans le document US 6,737,863 est décrit un capteur comportant une sonde à effet Hall qui, au cours d'un procédé en plusieurs étapes, est tout d'abord fixée à la surface d'un premier bloc en matériau plastique dans lequel sont noyés des connecteurs du capteur, le sous-ensemble ainsi obtenu étant à son tour placé dans un moule pour être noyé dans une seconde masse de matériau plastique constituant un boîtier pour le capteur. Le procédé d'assemblage est particulièrement complexe et nécessite des installations onéreuses.

### EXPOSE DE L'INVENTION

L'invention vise donc à remédier aux inconvénients de l'état de la technique, de manière à proposer un procédé d'assemblage simple d'un capteur électromagnétique ou optique à l'intérieur de son boîtier, qui permette d'une part une grande variété des formes de capteurs pour un boîtier donné, et d'autre part une bonne précision dans le positionnement du capteur par rapport à une paroi extérieure de référence du boîtier, de manière à faciliter le positionnement ultérieur précis du capteur par rapport à une cible située à faible distance.

A cet effet, et suivant un premier aspect de l'invention, celle-ci a pour objet un procédé de montage d'un capteur électromagnétique ou optique dans un boîtier comportant un socle rigide pourvu d'au moins une paroi délimitant l'intérieur du boîtier de l'extérieur du boîtier, le socle ayant une surface extérieure de positionnement tournée vers l'extérieur, le procédé comportant les étapes suivantes:
- la surface extérieure de positionnement est placée au contact d'un gabarit de montage ;
- le capteur est placé dans une position de montage au moins partiellement à l'intérieur du boîtier, sans contact avec le socle, en contact avec le gabarit au travers d'une ouverture de la paroi ;
- un matériau coulant est introduit à l'intérieur du boîtier de manière à noyer au moins partiellement le capteur ; et
- le matériau coulant est solidifié de manière à fixer le capteur en position par rapport au boîtier.

Le capteur se trouve ainsi positionné de manière indirecte par rapport au boîtier, se qui permet de s'affranchir des variations dimensionnelles d'un boîtier à l'autre.

Préférentiellement, l'étape d'introduction d'un matériau coulant comporte une étape d'injection du matériau coulant par un orifice d'injection du boîtier.

Préférentiellement, on prévoit en outre une étape de fermeture du boîtier par montage d'un couvercle sur le socle, la fermeture du boîtier succédant au placement du capteur et précédant l'introduction du matériau coulant. Suivant un mode de réalisation particulièrement avantageux, le capteur est maintenu en appui élastique contre la surface de référence pendant l'introduction du matériau coulant par l'intermédiaire d'un organe élastique solidaire du couvercle.

Selon un mode de réalisation particulièrement simple, l'appui élastique est réalisé grâce à des éléments élastiques solidaires du couvercle. Avantageusement, la fermeture du boîtier peut-être obtenue par des moyens d'assemblage à baïonnette, le moyen élastique assurant le maintien en position du couvercle par rapport au socle.

Suivant un deuxième aspect de l'invention, celle-ci a trait à un dispositif de mesure comportant : un boîtier rigide en matériau moulé comportant un socle pourvu d'une ouverture et un couvercle ; un capteur électromagnétique ou optique placé au moins partiellement à l'intérieur du boîtier, sans contact avec le socle, une face de référence du capteur étant accessible de l'extérieur du boîtier par l'ouverture ; et une masse de matériau polymérisé dans laquelle est au moins partiellement noyé le capteur, et qui fixe mécaniquement le capteur par rapport au boîtier.

Selon un mode de réalisation, l'ouverture est pratiquée dans un renfoncement d'une paroi du socle, ce qui offre une protection supplémentaire au capteur, tout en garantissant l'entrefer recherché.

Selon un mode de réalisation, la face de référence du capteur se trouve dans un plan défini par le rebord de l'ouverture, de sorte que le capteur affleure à la surface extérieure de l'ouverture.

Avantageusement, le boîtier comporte en outre au moins un relief de positionnement extérieur et/ou un élément de fixation extérieure, pour permettre sa fixation par rapport à une cible extérieure.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels:
- La figure 1 illustre un éclaté d'un dispositif de mesure selon un premier mode de réalisation de l'invention ;
- La figure 2 illustre en coupe le dispositif de mesure de la figure 1 dans une position de fin de montage ;
- La figure 3 illustre un éclaté d'un dispositif de mesure selon un deuxième mode de réalisation de l'invention.

### DESCRIPTION DETAILLEE D'UN MODE DE REALISATION

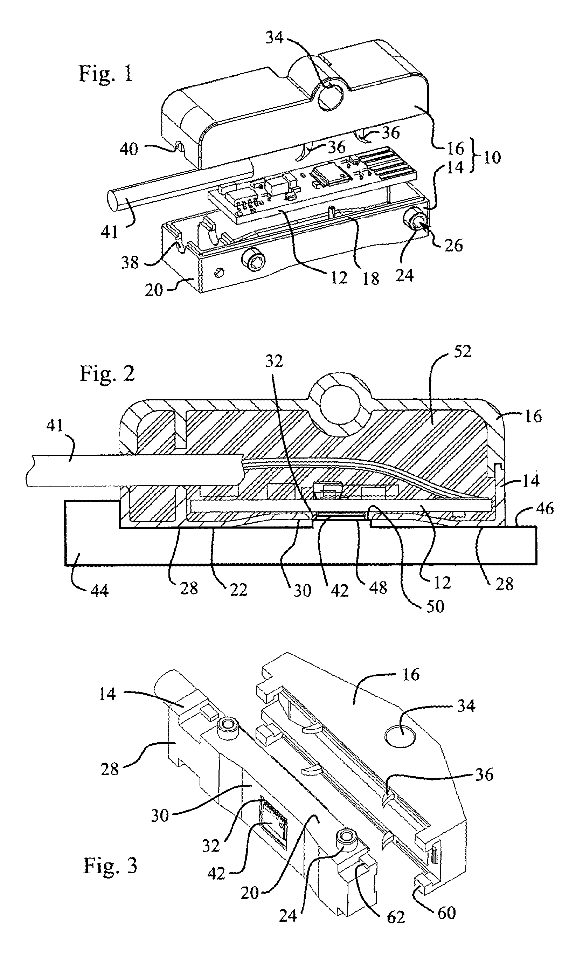

En référence à la figure 1, un dispositif de mesure comportant un boîtier rigide 10, de préférence moulé en matière thermoplastique, renferme et protège un circuit imprimé 12 de mesure. Le boîtier est en deux parties, avec un socle 14 et un couvercle 16 joints l'un à l'autre au niveau de rebords périphériques 18 formant des reliefs permettant un emboîtement et une fixation par des languettes élastiques (non représentées).

Le socle comporte des parois latérales 20 et une paroi postérieure 22 (figure 2) opposée au couvercle. Une des parois latérales est pourvue de plots de positionnement 24 cylindriques creux formant chacun un orifice de passage 26 entre l'extérieur et l'intérieur du boîtier. La surface extérieure de la paroi postérieure 22 comporte deux facettes coplanaires 28 séparées l'une de l'autre par un renfoncement 30 pourvu d'une ouverture rectangulaire 32. Le couvercle 16 est pourvu d'une douille cylindrique 34 permettant l'insertion d'une tige de fixation (non représentée) pour fixer le dispositif de mesure dans son environnement. A l'intérieur du couvercle sont formées deux languettes élastiques 36 faisant saillie vers le socle. Des ouvertures complémentaires 38, 40 sont pratiquées sur une face latérale du socle et du couvercle pour permettre le passage d'un câble de connexion 41 du circuit imprimé 12.

Le dispositif de mesure une fois monté est représenté en coupe sur la figure 2. Le circuit imprimé 12 comporte sur sa face postérieure un capteur électromagnétique ou optique sous la forme d'un circuit intégré à application spécifique 42. Ce circuit intégré est relié à une électronique de traitement du signal et d'alimentation du circuit intégré, dont les éléments sont fixés sur la partie antérieure du circuit imprimé 12.

Le dispositif de mesure est représenté sur la figure 2 posé sur un gabarit de montage 44, dans une position de fin de montage. Plus spécifiquement, les facettes 28 du socle reposent sur des surfaces de positionnement 46 du gabarit alors qu'une face postérieure 48 du circuit intégré repose sur une autre surface de positionnement 50 du gabarit. Le circuit intégré est enrobé dans un bloc de résine 52 dont une partie vient notamment s'interposer entre le circuit intégré 42 et la paroi postérieure 22 du socle, autour de l'ouverture 32, de sorte que le circuit intégré n'est pas en contact avec le socle 14.

Le dispositif est assemblé de la manière suivante. Dans un premier temps, le socle 14 du boîtier est placé sur le gabarit de montage 44 de la manière représentée sur la figure 2. Le circuit imprimé 12 est ensuite placé à l'intérieur du socle, de manière que la face postérieure 48 du circuit intégré soit positionnée au contact de la surface de positionnement 50 du gabarit, à travers l'ouverture 32. Il est à noter que dans cette position, le circuit imprimé 12 n'est pas au contact du socle 14, de sorte que le positionnement du circuit intégré 42 par rapport au socle est déterminé uniquement par le gabarit 44. On monte ensuite le couvercle 16 sur le socle 14, les pattes élastiques 36 venant en appui élastique contre le circuit imprimé 12 et maintenant ainsi le circuit intégré 42 en appui contre le gabarit 44. Les éléments une fois placés dans cette position, on injecte un matériau d'enrobage coulant 52, sous forme par exemple de liquide, de pâte ou de mousse, par exemple une résine polymérisant à température ambiante, par l'un des orifices 26 pratiqués dans les plots, l'autre servant d'évent. Le matériau d'enrobage remplit le volume intérieur entre le boîtier 10 et le circuit imprimé 12, et notamment l'espace entre le circuit imprimé 12 et la paroi postérieure du socle 22, autour de l'ouverture 32. Le montage est achevé lorsque la résine a polymérisé et pris en masse.

Il est à noter que les pattes élastiques 36 sont conformées en crochets de sorte qu'une fois la résine 52 polymérisée, les pattes 36 assurent une fixation positive du couvercle 16 par rapport à la masse polymérisée 52. La résine polymérisée entre la paroi postérieure 22 et le circuit imprimé 12, notamment autour de l'ouverture 32, forme un joint d'étanchéité de bonne qualité. Les parois intérieures du socle sont également pourvues de reliefs assurant la solidarisation positive du socle 14 à la masse polymérisée 52.

Sur la figure 3 a été représenté un éclaté d'un dispositif de mesure selon un deuxième mode de réalisation de l'invention, qui ne diffère du premier que par le mode d'assemblage du couvercle sur le socle. Les signes de références utilisés pour la description du premier mode de réalisation ont été portés sur la figure 3 pour désigner les éléments identiques. Dans ce mode de réalisation, le couvercle 16 est pourvu de crochets 60 et le socle est pourvu d'encoches correspondantes 62.

Lors de l'assemblage du couvercle 16 sur le socle 14, le couvercle est présenté de manière que les crochets viennent se glisser dans les encoches à la manière d'un assemblage à baïonnette. Une fois dans cette position, le couvercle peut être relâché, car la force appliquée par les languettes élastiques 36 au circuit imprimé est transmise au socle et tend à écarter le socle 14 du couvercle 16, assurant ainsi le maintien des crochets 60 en appui dans les encoches 62. Cet assemblage est suffisant pour permettre le positionnement du boîtier ainsi pré-assemblé sur le gabarit et l'injection de résine, de manière similaire au premier mode de réalisation.

Naturellement, diverses modifications sont possibles.

Il est possible d'utiliser n'importe quelle partie du socle comme référence pour le positionnement sur le gabarit. En particulier, on peut prévoir de positionner les plots sur une forme correspondante du gabarit.

Le circuit intégré est de préférence affleurant à la surface extérieure du renfoncement, ou tout entier situé à l'intérieur du boîtier, pour des raisons évidentes de protection. Il est toutefois envisageable de prévoir que la surface de référence du circuit intégré fasse saillie à l'extérieur du boîtier.

L'ouverture n'est pas nécessairement placée dans un renfoncement, et la paroi postérieure peut par exemple être plane.

Le couvercle peut être fixé au socle par tout moyen approprié, y compris par des moyens de fixation extérieurs tels que des vis ou des agrafes. Les languettes élastiques peuvent à elles seules assurer la fixation positive du couvercle au socle par l'intermédiaire de la résine solidifiée. Dans ce cas, il convient, durant le montage et la polymérisation, de maintenir le couvercle en appui contre le socle.

Le cordon électrique de liaison du capteur peut avantageusement être remplacé par un dispositif à antenne assurant l'alimentation locale du capteur et/ou la transmission d'informations sans fil entre le capteur et l'extérieur.

Le circuit intégré 42 peut être remplacé par tout autre type de capteur électromagnétique ou optique. Le procédé décrit est également applicable en l'absence de circuit imprimé de support du capteur.

## Revendications

1. Procédé de montage d'un capteur électromagnétique ou optique dans un boîtier (10) comportant un socle rigide (14) pourvu d'au moins une paroi (22) délimitant l'intérieur du boîtier de l'extérieur du boîtier, le socle ayant une surface extérieure de positionnement tournée vers l'extérieur, le procédé comportant les étapes suivantes :
- la surface extérieure de positionnement est placée au contact d'un gabarit de montage (44) ;
- le capteur (42) est placé dans une position de montage au moins partiellement à l'intérieur du boîtier, sans contact avec le socle (14), en contact avec le gabarit (44) au travers d'une ouverture (32) de la paroi ;
- un matériau coulant (52) est introduit à l'intérieur du boîtier (10) de manière à noyer au moins partiellement le capteur (42) ; et
- le matériau coulant (52) est solidifié de manière à fixer le capteur (42) en position par rapport au boîtier (10).

2. Procédé selon la revendication 1, dans lequel l'étape d'introduction d'un matériau coulant comporte une étape d'injection du matériau coulant par un orifice d'injection (26) du boîtier.

3. Procédé selon la revendication 1 ou la revendication 2, comportant en outre une étape de fermeture du boîtier par montage d'un couvercle (16) sur le socle (14), la fermeture du boîtier succédant au placement du capteur (42) et précédant l'introduction du matériau coulant (52).

4. Procédé selon la revendication 3, dans lequel le capteur est maintenu en appui élastique contre la surface de référence pendant l'introduction du matériau coulant par l'intermédiaire d'un organe élastique (36) solidaire du couvercle (16).

5. Procédé selon la revendication 4, dans lequel l'appui élastique est réalisé grâce à des éléments élastiques (36) solidaires du couvercle (16).

6. Procédé selon la revendication 5, dans lequel la fermeture du boîtier (10) est obtenue par des moyens d'assemblage à baïonnette, le moyen élastique (36) assurant le maintien en position du couvercle (16) par rapport au socle (14).

7. Dispositif de mesure comportant :
- un boîtier rigide (10) en matériau moulé comportant un socle (14) pourvu d'une ouverture (32) et un couvercle (16) ;
- un capteur électromagnétique ou optique (42) placé au moins partiellement à l'intérieur du boîtier (10), sans contact avec le socle (14), une face de référence (48) du capteur étant accessible de l'extérieur du boîtier (10) par l'ouverture (32) ; et
- une masse (52) de matériau polymérisé dans laquelle est au moins partiellement noyé le capteur (42), et qui fixe mécaniquement le capteur (42) par rapport au boîtier (10).

8. Dispositif de mesure selon la revendication 7, dans lequel l'ouverture (32) est pratiquée dans un renfoncement (30) d'une paroi (22) du socle.

9. Dispositif de mesure selon la revendication 8, dans lequel la face de référence du capteur se trouve dans un plan défini par le rebord de l'ouverture (32).

10. Dispositif selon l'une quelconque des revendications 7 à 9, dans lequel le boîtier comporte en outre au moins un relief de positionnement extérieur (24).

11. Dispositif selon l'une quelconque des revendications 7 à 10, dans lequel le boîtier comporte en outre un élément de fixation (34) extérieure.
